# FASCICULE DE BREVET EUROPEEN

(11) **EP 1 133 711 B1**
(45) Date de publication et mention de la délivrance du brevet: **25.05.2005**
(21) Numéro de dépôt: 99974038.4
(22) Date de dépôt: 12.10.1999
(51) Int. Cl.: G02B 17/00, A63H 33/22

(54) **INSTRUMENT D'OPTIQUE A VISION DU PLAFOND DANS UN MIROIR HORIZONTAL**
OPTISCHE VORRICHTUNG ZUR SICHT AUF DIE DECKE MIT EINEM HORIZONTALEN SPIEGEL.
OPTICAL INSTRUMENT WITH UPWARD VIEWING IN A HORIZONTAL MIRROR

(30) Priorité: 23.09.1999 FR 9911869
(43) Date de publication de la demande: 19.09.2001
(73) Titulaire: Majax, Gérard, 75018 Paris (FR)
(72) Inventeur: Majax, Gérard, 75018 Paris (FR)
(86) Numéro de dépôt international: PCT/FR1999/002454
(87) Numéro de publication internationale: WO 2001/022145

(56) Documents cités:
- EP-A- 0 741 982
- US-A- 3 019 689
- US-A- 4 679 916
- US-A- 5 422 759
- PATENT ABSTRACTS OF JAPAN vol. 1998, no. 08, 30 juin 1998 (1998-06-30) & JP 10 080575 A (SEGA ENTERP LTD), 31 mars 1998 (1998-03-31)

## Description

La présente invention concerne un dispositif destiné à créer une illusion optique. Un tel dispositif est connu de US 5 711 529 (Nielsen et al.). L'instrument a optique selon la présent invention est destiné à maintenir un miroir horizontalement à la hauteur des yeux d'un utilisateur. Le maintien du miroir à cette hauteur permet à l'utilisateur de voir le plafond dans ce miroir comme s'il s'agissait du sol.

Le dispositif selon l'invention permet de maintenir le miroir horizontalement. Il comporte en effet une premiére caractéristique; un support présentant deux butées perpendiculaires qui s'appuieront sur les joues de l'utilisateur. Selon des modes particuliers de réalisation: -Deux bandes de fixation aimantées, passant sur la tête de l'utilisateur, permettront de rêgler la hauteur du dispositif. - Deux bandes de fixation aimantées, passant derriére la tête de l'utilisateur, permettront de maintenir le dispositif contre son visage.

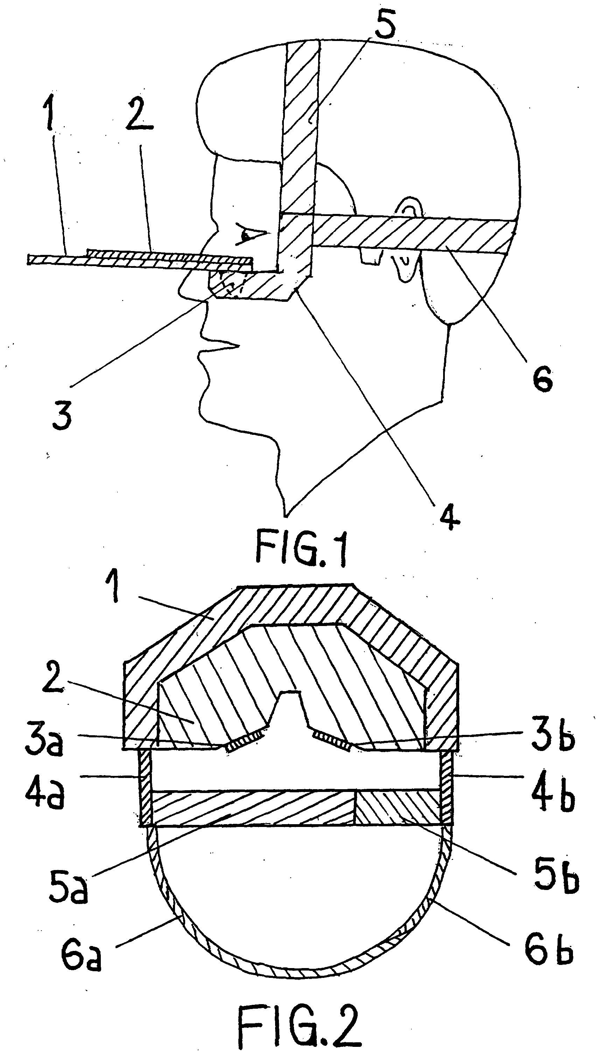

Les dessins annexés illustrent l'invention: La figure 1 représente en coupe, vu de côté le dispositif de l'invention en place sur la tête d'un utilisateur. La figure 2 représente en coupe, vu de dessus le dispositif de de l'invention.

En référence à ces dessins, le dispositif comporte un support en matiére plastique (1) dont la découpe correspond à la forme moyenne du nez et des joues des utilisateurs potentiels (visibles sur la fig 2).

Un miroir (2) en matiére incassable est collé sur le support. Sa forme correspond à celle du support (visible sur la fig 2)

Deux butées perpendiculaires (3a et 3b) en matiére plastique sont fixées sous les côtés du support de maniére à s'apuyer sur les joues de l'utilisateur et à permettre ainsi au miroir de demeurer horizontal.

Deux branches de fixation (4a et 4b) en matiére plastique sont fixées sous les côtés du support du miroir afin de permettre la liaison avec les sangles de fixation (5 et 6).

Les deux sangles de fixation (5a et 5b) sont composées de matiére plastique aimantée. Il suffit donc de les plaquer l'une sur l'autre pour les fixer sur la tête de l'utilisateur à la dimension voulue et rêgler ainsi la hauteur du dispositif, de maniére à à ce que le miroir se situe sous les yeux de l'utilisateur. Les deux sangles de fixation (6a et 6b) en restant souples sont composées de matiére plastique aimantée. Fixées derriére la tête de l'utilisateur, elles permettent de maintenir le dispositif plaqué au visage de l'utilisateur.

A titre d'exemple non limitatif, le support aura des dimensions de l'ordre de 18cm pour la largeur et de 11cm pour la profondeur. Le miroir:15cm/7cm. but de l'invention: Le dispositif selon l'invention est particuliérement destiné à reflêter le plafond sous les yeux d'un utilisateur de telle sorte qu'il aura l'illusion de marcher sur ce même plafond. L'application premiére est un parcours ludique pour Parc d'attraction, Musée ou foire. Un parcours guidé par deux rampes permet à l'utilisateur de marcher sur un sol horizontal et stable tout en ayant l'illusion de marcher sur le décor ludique du plafond.

La deuxiéme application est plus industrielle avec avec la fabrication et la vente de modéles simples de ce dispositif comme jeu de groupe que l'on exerçe en famille ou entre amis, chacun s'amusant de de l'étonnement de l'utilisateur découvrant les surprises installées au plafond comme des barriéres magiques, selon le parcours où on le guidera.

## Revendications

1. Dispositif destiné à créer une illusion d'optique, **caractérisé en ce qu'**il est constitué par un miroir (2) dont la découpe correspond à la forme moyenne du nez et des joues d'un utilisateur, et des moyens de fixation pour maintenir le miroir horizontalement sous les yeux de l'utilisateur, de manière que, par reflet, celui-ci voie un plafond, en lui donnant l'illusion d'y marcher, comme s'il s'agissait du sol.

2. Dispositif selon la revendication 1, **caractérisé en ce que** les moyens de fixation sont constitués par des sangles (5, 6) permettant le maintien dudit dispositif contre le visage de l'utilisateur et le réglage de sa hauteur.

3. Dispositif selon la revendication 2, **caractérisé en ce que** sa fixation est assurée par deux sangles (5a et 5b), de dimensions voulues, fixées sur la tête de l'utilisateur, permettant un réglage du dispositif en hauteur, et deux sangles (6a et 6b), fixées derrière la tête de l'utilisateur, permettant le placage du dispositif sur son visage.

4. Dispositif selon la revendication 3, **caractérisé en ce que** les sangles de fixation (5a, 5b et 6a, 6b), sont composées de matière plastique aimantée.

5. Dispositif selon l'une des revendications 2 à 4, **caractérisé en ce que** le miroir (2) est fixé par collage sur un support (1) horizontal, de forme correspondante, sous les cotés duquel sont également fixées deux branches de fixation (4a, 4b), en matière plastique, permettant la liaison avec les sangles (5a, 5b et 6a, 6b), assurant le maintien de l'ensemble du dispositif.

6. Dispositif selon la revendication 5, **caractérisé en ce que** le support (1) présente deux butées perpendiculaires (3a, 3b) s'appuyant sur les joues de l'utilisateur.

7. Dispositif selon l'une des revendications 5 ou 6, **caractérisé en ce que** le support (1) est réalisé en matière plastique et présente une découpe correspondant à la forme moyenne du nez et des joues d'un utilisateur.

8. Attraction **caractérisée en ce qu'**elle comprend un parcours ludique et un dispositif selon l'une des revendications 1 à 7 et au moins une rampe pour guider un utilisateur pour lui permettre par utilisation du dispositif de marcher sur un sol horizontal et stable, tout en ayant l'illusion de marcher sur le décor ludique du plafond, en découvrant les surprises qui y sont installées, comme autant de barrières magiques.

## Patentansprüche

1. Vorrichtung, die zum Erzeugen einer optischen Illusion bestimmt ist, **dadurch gekennzeichnet, dass** sie aus einem Spiegel (2), dessen Zuschnitt der durchschnittlichen Form der Nase und der Wangen eines Benutzers entspricht, und aus Befestigungsmitteln gebildet ist, um den Spiegel horizontal unter den Augen des Benutzers zu halten, so dass dieser durch Reflexion eine Zimmerdecke sieht, wobei ihm die Illusion vermittelt wird, auf dieser zu gehen, als würde es sich um den Boden handeln.

2. Vorrichtung nach Anspruch 1, **dadurch gekennzeichnet, dass** die Befestigungsmittel aus Riemen (5, 6) gebildet sind, die das Halten der Vorrichtung an dem Gesicht des Benutzers und die Einstellung ihrer Höhe ermöglichen.

3. Vorrichtung nach Anspruch 2, **dadurch gekennzeichnet, dass** ihre Befestigung aus zwei Riemen (5a und 5b) von beliebiger Abmessung, die auf dem Kopf des Benutzers befestigt sind und die Höheneinstellung der Vorrichtung ermöglichen, und aus zwei Riemen (6a und 6b) gebildet ist, die hinter dem Kopf des Benutzers befestigt werden und das Anlegen der Vorrichtung an sein Gesicht ermöglichen.

4. Vorrichtung nach Anspruch 3, **dadurch gekennzeichnet, dass** die Befestigungsriemen (5a, 5b und 6a, 6b) aus magnetischem Kunststoff bestehen.

5. Vorrichtung nach einem der Ansprüche 2 bis 4, **dadurch gekennzeichnet, dass** der Spiegel (2) durch Kleben auf einer horizontalen Stütze (1) von entsprechender Form befestigt ist, unter deren Seiten auch zwei Befestigungsabschnitte (4a, 4b) aus Kunststoff befestigt sind, die die Verbindung mit den Riemen (5a, 5b und 6a, 6b) ermöglichen, die den Halt der gesamten Vorrichtung sicher stellen.

6. Vorrichtung nach Anspruch 5, **dadurch gekennzeichnet, dass** die Stütze (1) zwei senkrechte Anschläge (3a, 3b) aufweist, die sich an den Wangen des Benutzers abstützen.

7. Vorrichtung nach einem der Ansprüche 5 oder 6, **dadurch gekennzeichnet, dass** die Stütze (1) aus Kunststoff ausgeführt ist und einen Zuschnitt aufweist, der der durchschnittlichen Form der Nase und der Wangen eines Benutzers entspricht.

8. Attraktion, **dadurch gekennzeichnet, dass** sie einen Spielparcours und eine Vorrichtung nach einem der Ansprüche 1 bis 7 und mindestens eine Rampe umfasst, um einen Benutzer zu führen, um es ihm durch die Verwendung der Vorrichtung zu ermöglichen, auf einem horizontalen und stabilen Boden zu gehen und gleichzeitig die Illusion zu haben, auf dem Spieldekor der Zimmerdecke zu gehen, wobei er die darin vorgesehenen Überraschungen als ebenso viele magische Schranken entdeckt.

## Claims

1. Device intended to create an optical illusion, **characterised in that** it consists of a mirror (2), the cutout in which corresponds to the average shape of the nose and cheeks of a user, and fixing means for holding the mirror horizontally under the eyes of the user, so that, by reflection, the latter sees a ceiling, giving him the illusion of walking thereon, as if it were the floor.

2. Device according to Claim 1, **characterised in that** the fixing means consist of straps (5, 6) enabling the safety device to be held against the face of the user and its height to be adjusted.

3. Device according to Claim 2, **characterised in that** it is fixed by two straps (5a and 5b), of the required dimensions, fixed to the head of the user, allowing adjustment of the device for height, and two straps (6a and 6b) fixed behind the head of the user, enabling the device to be pressed on his face.

4. Device according to Claim 3, **characterised in that** the fixing straps (5a, 5b and 6a,6b) are composed of magnetised plastics material.

5. Device according to one of Claims 2 to 4, **characterised in that** the mirror (2) is fixed by adhesive bonding to a horizontal support (1), with a corresponding shape, under the sides in which there are also fixed two fixing arms (4a, 4b) made from plastics material, affording connection with the straps (5a, 5b and 6a, 6b), ensuring the holding of the whole of the device.

6. Device according to Claim 5, **characterised in that** the support (1) has two perpendicular stops (3a, 3b) resting on the cheeks of the user.

7. Device according to one of Claims 5 or 6, **characterised in that** the support (1) is produced from plastics material and has a cutout corresponding to the average shape of the nose and cheeks of a user.

8. Attraction **characterised in that** it comprises a game journey and a device according to one of Claims 1 to 7 and at least one ramp for guiding a user to enable him by use of the device to walk on a stable horizontal floor whilst having the illusion of walking on the game décor of the ceiling, discovering surprises which are installed thereon, as so many magical barriers.
